# EUROPEAN PATENT APPLICATION

(11) **EP 2 693 728 A1**
(43) Date of publication of application: **05.02.2014**
(21) Application number: 11862316.4
(22) Date of filing: 27.12.2011
(51) Int. Cl.: H04M 3/00, H04L 12/56, H04M 11/00, H04Q 3/58

(54) **DATA COMMUNICATION SYSTEM, DATA COMMUNICATION TERMINAL, DATA COMMUNICATION METHOD, AND COMPUTER PROGRAM**

(30) Priority: 30.03.2011 JP 2011074525
(71) Applicant: NEC Infrontia Corporation, Kawasaki-shi, Kanagawa 213-8511 (JP); Nippon Telegraph And Telephone East Corporation, Tokyo 163-8019 (JP); Nippon Telegraph and Telephone West Corporation, Osaka-shi Osaka 540-8511 (JP)
(72) Inventor: NASHIMOTO, Kohei, Kawasaki-shi Kanagawa 213-8511 (JP); NUMAZAKI, Kenji, Tokyo 163-8019 (JP); FURUKAWA, Yasuyuki, Osaka-shi Osaka 540-8511 (JP); SHIKENYA, Shozo, Osaka-shi Osaka 540-8511 (JP)
(74) Representative: Vossius & Partner
(86) International application number: PCT/JP2011/080214
(87) International publication number: WO 2012/132157

(57) **Abstract**

Provided are a data communication system, a data communication terminal, a data communication method and a computer program for allowing activation of Web services without need of a plurality of telephone number contracts. In a data communication system where communications are performed between a first communication terminal and a second communication terminal via a network, the first communication terminal includes a control means for controlling the activation of a predetermined Web service on the basis of session information received from the second communication terminal. The session information, which is information using Session Initiation Protocol (SIP), comprises a request destination, a header and a message body. The message body describes session-related information that uses Session Description Protocol (SDP).

## Description

### {Technical Field}

The present application claims priority from Japanese Patent Application No. 2011-074525 filed on March 30, 2011. The entire disclosure of the application is hereby incorporated by reference.

The present invention relates to a data communication system, a data communication terminal, a data communication method, and a computer program, and more particularly, to a data communication system, a data communication terminal, a data communication method, and a computer program that enable activation of a Web service without requiring a user to subscribe to a plurality of telephone numbers.

### {Background Art}

In recent years, movement toward building of the Next Generation Network (NGN), in which a conventional telephone line network having a line switching system is replaced by a network built based on an Internet Protocol (IP) technology, has become more active.

NGN is an IP network in which the network itself has a bandwidth guarantee function and a security function to integrally realize a telephone service, a video communication service, a data communication service, and other such services by using the Session Initiation Protocol (SIP).

For example, in PTL 1, there is proposed a technology relating to a media transfer apparatus that analyzes an SIP signal before media transfer to determine a media transfer method and executes the media transfer in accordance with the determined media transfer method.

### {Citation List}

### {Patent Literature}

PTL1: JP 2001-024809 A

### {Summary of Invention}

### {Technical Problem}

In order to use a data communication service provided by an IP telephone line to activate a Web service, it has been usually necessary for a calling party or a called party to subscribe to a telephone number dedicated to data communication for the purpose of distinguishing from voice communication and video communication.

Moreover, with the technology disclosed in Patent Literature 1, there has been a problem in that, although it is not necessary to subscribe to the telephone number dedicated to the data communication, a log-in ID number is required in addition to the caller's telephone number.

The present invention has an object to provide a data communication system, a data communication terminal, a data communication method, and a computer program that enable activation of a Web service without requiring a user to subscribe to a plurality of telephone numbers.

### {Solution to Problem}

According to one aspect of the present invention, there is provided a data communication system, including a first communication terminal and a second communication terminal that perform communication to/from each other via a network, in which the first communication terminal includes control means for controlling activation of a predetermined Web service based on session information transmitted from the second communication terminal, the session information is information using SIP, and includes a Request-Line, a header, and a message body, and the message body has information on a session using SDP described therein.

According to another aspect of the present invention, there is provided a data communication method for use in a data communication system, the data communication system including a first communication terminal and a second communication terminal that perform communication to/from each other via network, the data communication method including a control step of controlling, by the first communication terminal, activation of a predetermined Web service based on session information transmitted from the second communication terminal, in which the session information is information using SIP, and includes a Request-Line, a header, and a message body, and the message body has information on a session using SDP described therein.

According to another aspect of the present invention, there is provided a computer program for causing a computer to execute data communication processing of a data communication system, the data communication system including a first communication terminal and a second communication terminal that perform communication to/from each other via a network, the computer program causing the computer to execute processing including a control step of controlling activation of a predetermined Web service based on session information transmitted from the second communication terminal, in which the session information is information using SIP, and includes a Request-Line, a header, and a message body, and the message body has information on a session using SDP described therein.

According to another aspect of the present invention, there is provided a data communication terminal for performing communication to/from another communication terminal via a network, the data communication terminal including control means for controlling activation of a predetermined Web service based on session information transmitted from the another communication terminal, in which the session information is information using SIP, and includes a Request-Line, a header, and a message body, and the message body has information on a session using SDP described therein.

### {Advantageous Effects of Invention}

According to the present invention, it is possible to provide the data communication system, the data communication terminal, the data communication method, and the computer program that enable activation of a Web service without requiring a user to subscribe to a plurality of telephone numbers.

### {Brief Description of Drawings}

FIG. 1 is a block diagram illustrating a configuration example of a data communication system according to an embodiment of the present invention.
FIG. 2 is a flowchart illustrating Web service automatic switching processing in the data communication system.
FIG. 3 is a diagram illustrating a processing example of FIG. 2.
FIG. 4 is a diagram illustrating another processing example of FIG. 2.
FIG. 5 is a flowchart illustrating details of service selection processing performed in Step S3 of FIG. 2.

### {Description of Embodiments}

### [About Embodiment of the Present Invention]

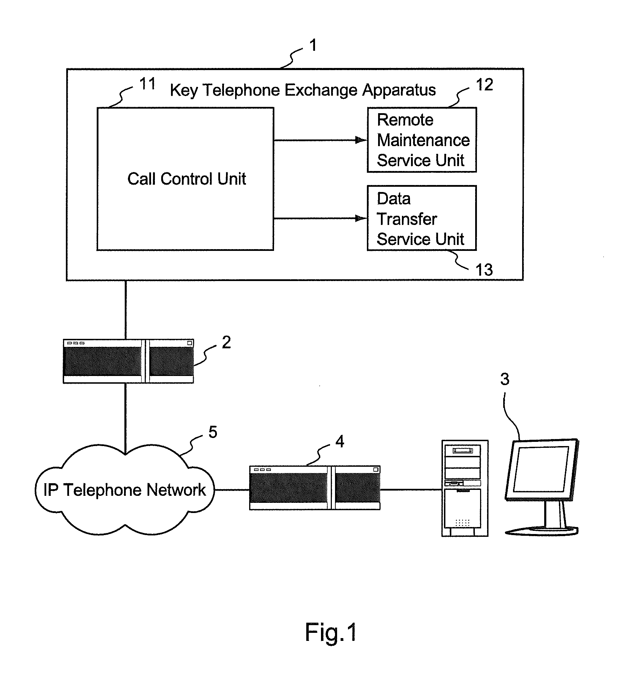

FIG. 1 is a block diagram illustrating a configuration example of a data communication system according to an embodiment of the present invention. This data communication system includes a key telephone exchange apparatus 1 connected to an Internet Protocol (IP) telephone network 5 via a router 2 and a service operation terminal 3 connected to the IP telephone network 5 via a router 4. Note that, the numbers of the key telephone exchange apparatus 1 and the service operation terminals 3 are arbitrary, and it should be understood that a plurality of key telephone exchange apparatus 1 may be provided and a plurality of service operation terminals 3 may also be provided.

The key telephone exchange apparatus 1 is a computer system including a central processing unit (CPU), a read only memory (ROM), and a random access memory (RAM), and has functions of a call control unit 11, a remote maintenance service unit 12, and a data transfer service unit 13.

When receiving a call from the service operation terminal 3 via the IP telephone network 5, the call control unit 11 identifies and authenticates a media type and a media format that are described in an "m" line (part for describing a media name and a transmission address) of the Session Initiation Protocol/Session Description Protocol (SIP/SDP), which is session information at the time of receiving a call, to thereby establish a data communication session. After establishing data communication, the call control unit 11 activates one of Web services including the remote maintenance service unit 12 and the data transfer service unit 13, and notifies a calling party of the port number. This enables the service operation terminal 3 to access a port for a desired Web service and use the desired service.

SIP is a protocol for establishing, modifying, and terminating a multi-media session, and includes a Request-Line, a header, and a message body. Among them, in the message body, information on the multi-media session is described by a protocol called "SDP".

For example, in the form of "m=value", a type of media (such as "application" (application), "audio" (audio), and "video" (video)), a port number of a port for receiving the media, and a transport protocol used for receiving the media (such as Real-Time Transport Protocol (RTP) and Transmission Control Protocol (TCP)) are described as information on the media.

In addition, for example, in the form of "c=value", a network type, an IP version (such as Internet Protocol version (IPv) 4 and IPv6), and an IP address for receiving the media are described as connection information.

The remote maintenance service unit 12 activates a remote maintenance service in response to the control of the call control unit 11. The data transfer service unit 13 activates a data transfer service in response to the control of the call control unit 11.

The service operation terminal 3 includes a control unit including a CPU, a ROM, and a RAM, an input unit including a keyboard and a mouse, an output unit including a display and a speaker, a storage unit including a hard disk drive (HDD) and a non-volatile memory, and a network communication unit. After transmitting, in response to an instruction of a user, a call to the key telephone exchange apparatus 1 via the router 4 and the IP telephone network 5 to establish the data communication, the service operation terminal 3 can use the Web service (remote maintenance service, data transfer service, or other such services) provided from the key telephone exchange apparatus 1.

The router 2 is a communication device for connecting the key telephone exchange apparatus 1 and the IP telephone network 5 to each other. The router 4 is a communication device for connecting the service operation terminal 3 and the IP telephone network 5 to each other.

The IP telephone network 5 is a network including the Next Generation Network and the Internet.

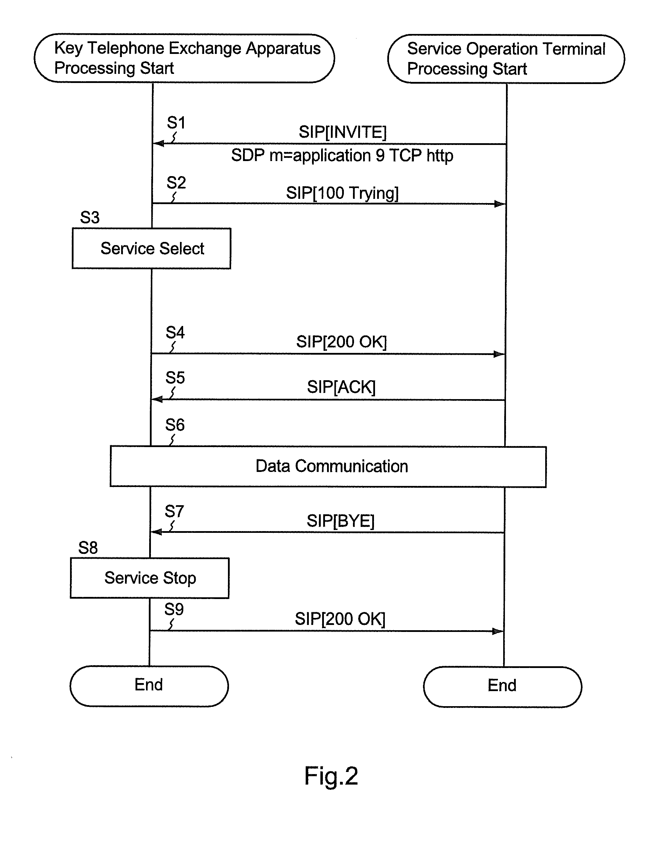

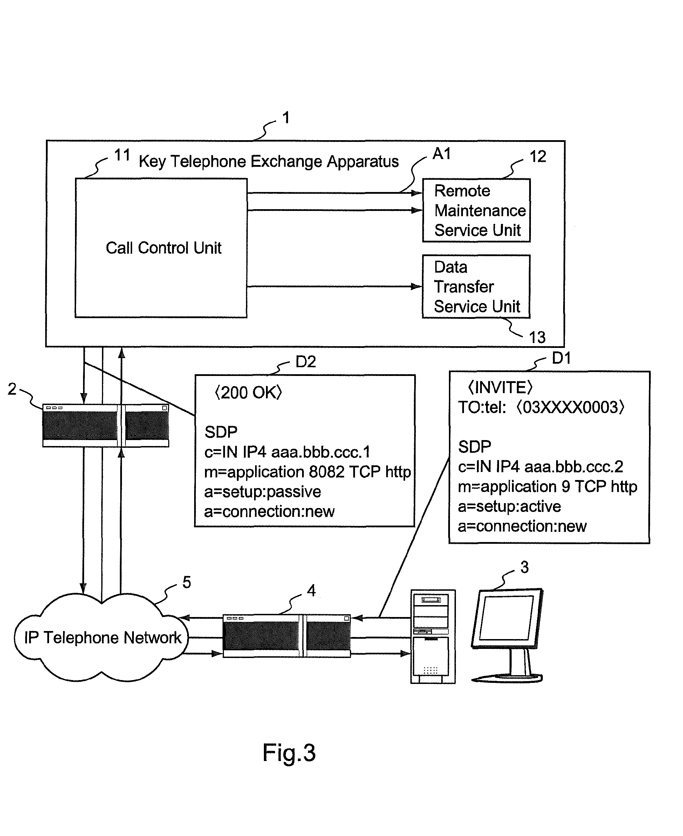

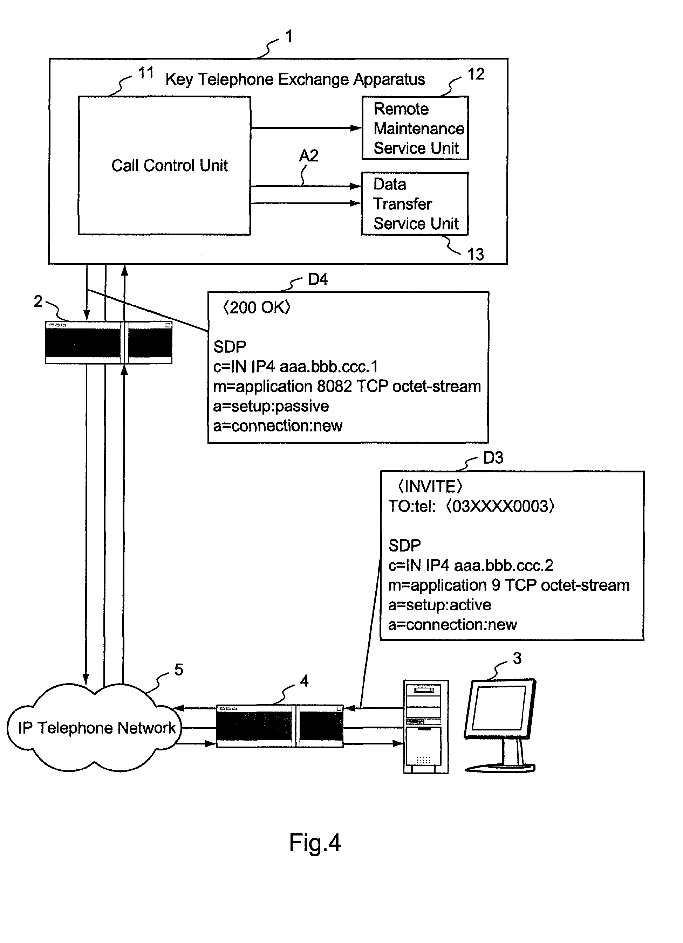

Next, referring to a flowchart of FIG. 2, a description is given of Web service automatic switching processing in the data communication system. For the description of FIG. 2, processing examples corresponding to specific data are also described referring to FIGS. 3 and 4.

In Step S1, the control unit of the service operation terminal 3 transmits an INVITE request in which a telephone number dialed by the user is set as a destination and the own IP address, the media type of audio or data, and the port number are set as the SIP/SDP to the IP telephone network 5 via the router 4.

The INVITE request is a request for making a request for a call and initiating a session. The INVITE request has a text format, and includes a Request-Line, a header, and a body.

In the Request-Line, a type of request (INVITE), a uniform resource identifier (URI) for indicating a destination of the request, and a version of SIP are described. In the header of the INVITE request, information for indicating an outline of this request is contained, and a plurality of headers are arranged in the form of "header name: value".

In the body of the INVITE request, information on a call to be made subsequently is described by SDP. Information for identifying a session, a type of data to be transmitted in the session, and other such information can be described by using SDP. Those pieces of information are described in the form of "type=value". Types to be used in this embodiment include a "c" line, an "m" line, and an "a" line.

The "c" line is a type indicating the connection information, and a network type, an address type, a host name or IP address of a transmission source are described therein.

The "m" line is a type indicating information on media, and a media type, a port number, a protocol, and a media format are described therein.

Depending on the type of media to be transmitted, "audio", "video", "text", "application", "message", or the like is described as the media type. As the port number, the port number of a reception port for receiving the media by the RTP is described. As the protocol, the protocol to be used for media transmission is described. As the media format, the format of media to be used is described.

The "a" line is a type indicating various attributes.

In the case of an example of FIG. 3, in data D1 of the INVITE request, the telephone number as the destination "03××××0003" is described next to "TO:tel:". In the "c" line of SDP, "IN" is described as the network type, "IP4" is described as the address type, and "aaa.bbb.ccc.2" is described as a transmission source IP address. In the "m" line of SDP, "application" is described as the media type, "9" is described as the port number, "TCP" is described as the protocol, and "http" is described as the media format. In the "a" line of SDP, "setup:active" and "connection:new" are described.

In the case of an example of FIG. 4, in data D3 of the INVITE request, the telephone number as the destination "03××××0003" is described next to "TO:tel:". In the "c" line of SDP, "IN" is described as the network type, "IP4" is described as the address type, "aaa.bbb.ccc.2" is described as the transmission source IP address. In the "m" line of SDP, "application" is described as the media type, "9" is described as the port number, "TCP" is described as the protocol, and "octet-stream" is described as the media format. In the "a" line of SDP, "setup:active" and "connection:new" are described.

The IP telephone network 5 extracts the IP address (aaa.bbb.ccc.2) of the key telephone exchange apparatus 1 from the destination (telephone number) of the INVITE request, determines that this INVITE request is addressed to the key telephone exchange apparatus 1, and transfers this INVITE request to the key telephone exchange apparatus 1.

In Step S2, the call control unit 11 of the key telephone exchange apparatus 1 receives the INVITE request via the router 2. The call control unit 11 of the key telephone exchange apparatus 1 then transmits, to the IP telephone network 5 via the router 2, "100 Trying" as a provisional response (Trying response) for notifying the service operation terminal 3 as the calling party that the call control unit 11 has received the INVITE request and is currently processing the request.

The Trying response is similar to the INVITE request. Specifically, the Trying response has a text format and includes a Response-Line and a header. The Response-Line is also called "Status-Line", and a version of SIP, a status code, and a reason phrase are described therein. The header of the INVITE request can be used almost directly as the header of the Trying response. In the example of FIG. 2, the status code of the Trying response is "100" and the reason phrase is "Trying".

Based on the session information contained in the Trying response, the IP telephone network 5 transfers the Trying response to the service operation terminal 3 as a request transmission source.

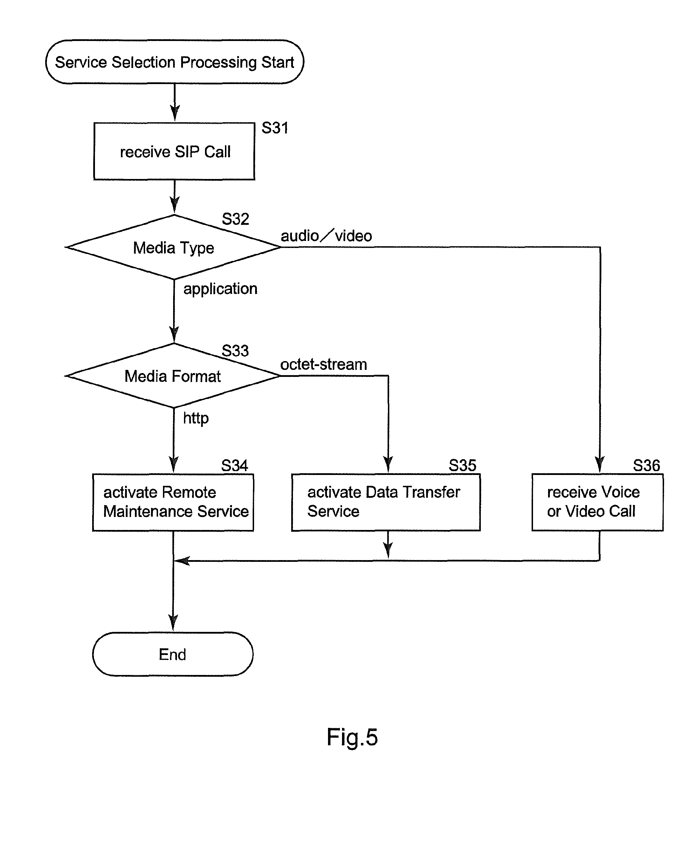

In Step S3, the call control unit 11 of the key telephone exchange apparatus 1 analyzes the telephone number, the SDP media type, and the SDP media format contained in the received INVITE request. The call control unit 11 of the key telephone exchange apparatus 1 then selects a predetermined service depending on an analysis result and activates the selected service. A description of this processing is given later with reference to a flowchart of FIG. 5.

For example, as illustrated in FIG. 3, when confirming that the media type contained in the INVITE request is "application" and the media format contained therein is "http"", the call control unit 11 of the key telephone exchange apparatus 1 activates an application of the remote maintenance service of the remote maintenance service unit 12 and further opens a Web port of the remote maintenance service unit 12 as indicated by an arrow A1.

Further, for example, as illustrated in FIG. 4, when confirming that the media type contained in the INVITE request is "application" and the media format contained therein is "octet-stream", the call control unit 11 of the key telephone exchange apparatus 1 activates an application of the data transfer service of the data transfer service unit 13 and further opens a Web port of the data transfer service unit 13 as indicated by an arrow A2.

In Step S4, the call control unit 11 of the key telephone exchange apparatus 1 transmits, to the IP telephone network 5 via the router 2, a response (OK response) for notifying the service operation terminal 3 as the calling party that the INVITE request has succeeded.

The OK response has a text format, and includes a Status-Line, a header, and a body. In the Status-Line, a version of SIP, a status code, and a reason phrase are described. The header of the INVITE request can be used almost directly as the header of the OK response. In the body, information on the call to be made subsequently is described by SDP as in the INVITE request.

In the example of FIG. 3, in data D2 as the OK response, "200" is described as the status code and "OK" is described as the reason phrase in the Status-Line. In the "c" line of the body, "IN" is described as the network type, "IP4" is described as the address type, and "aaa.bbb.ccc.1" is described as the transmission source IP address. In the "m" line of the body, "application" is described as the media type, "8082" is described as the port number, "TCP" is described as the protocol, and "http" is described as the media format. In the "a" line of the body, "setup:passive" and "connection:new" are described. Note that, the header is not shown.

In the example of FIG. 4, in data D4 as the OK response, "200" is described as the status code and "OK" is described as the reason phrase in the Status-Line. In the "c" line of the body, "IN" is described as the network type, "IP4" is described as the address type, and "aaa.bbb.ccc.1" is described as the transmission source IP address. In the "m" line of the body, "application" is described as the media type, "8082" is described as the port number, "TCP" is described as the protocol, and "octet-stream" is described as the media format. In the "a" line of the body, "setup:passive" and "connection:new" are described. Note that, the header is not shown.

The IP telephone network 5 extracts the IP address of the service operation terminal 3 (aaa.bbb.ccc.1) from the OK response, determines that this OK response is addressed to the service operation terminal 3, and transfers this OK response to the service operation terminal 3 as the request transmission source.

In Step S5, the control unit of the service operation terminal 3 receives the OK response via the router 4. Then, the control unit of the service operation terminal 3 transmits, as a request for confirming that the OK response has been received in response to the INVITE request, an ACK request to the IP telephone network 5 via the router 4.

The ACK request has a text format, and includes a Request-Line and a header. In the Request-Line, the type of request (ACK), a URI for indicating a destination of the request, and a version of SIP are described. In the header, information for indicating an outline of this request is contained, and a plurality of headers are arranged in the form of "header name: value".

The IP telephone network 5 extracts the IP address of the key telephone exchange apparatus 1 (aaa.bbb.ccc.2) from the ACK request, determines that this request is addressed to the key telephone exchange apparatus 1, and transfers this ACK request to the key telephone exchange apparatus 1.

Through the processing of Steps S1 to S5 described above, in Step S6, a session is established via the IP telephone network 5 between the service operation terminal 3 and a predetermined service of the key telephone exchange apparatus 1 (the remote maintenance service unit 12 or the data transfer service unit 13).

After the session is established, the service operation terminal 3 and the remote maintenance service unit 12 of the key telephone exchange apparatus 1 now performs the data communication to/from each other by the HTTP (or octet-stream) via the IP telephone network 5. With this, the service operation terminal 3 can operate the remote maintenance service by the HTTP (or data transfer service by the octet-stream) via the IP telephone network 5.

In Step S7, after executing a desired service, the control unit of the service operation terminal 3 transmits, as a request for making a request for terminating the call and terminating the session, a BYE request set as SIP/SDP to the IP telephone network 5 via the router 4.

The BYE request has a text format, and includes a Request-Line and a header. In the Request-Line, the type of request (BYE), a URI for indicating a destination of the request, and a version of SIP are described. In the header, information for indicating an outline of this request is contained, and a plurality of headers are arranged in the form of "header name: value".

The IP telephone network 5 extracts the IP address of the key telephone exchange apparatus 1 (aaa.bbb.ccc.2) from the BYE request, determines that this request is addressed to the key telephone exchange apparatus 1, and transfers this BYE request to the key telephone exchange apparatus 1.

In Step S8, the call control unit 11 of the key telephone exchange apparatus 1 receives the BYE request via the router 2. The call control unit 11 of the key telephone exchange apparatus 1 then stops the remote maintenance service being activated by the remote maintenance service unit 12 (or the data transfer service being activated by the data transfer service unit 13) based on the received BYE request.

In Step S9, the call control unit 11 of the key telephone exchange apparatus 1 transmits, as a response (OK response) for notifying the service operation terminal 3 as the calling party that the BYE request has succeeded, "200 OK" to the IP telephone network 5 via the router 2.

The IP telephone network 5 extracts the IP address of the service operation terminal 3 (aaa.bbb.ccc.1) from the OK response, determines that this OK response is addressed to the service operation terminal 3, and transfers this OK response to the service operation terminal 3 as the request transmission source.

Through the processing of Steps S7 to S9 described above, the session that has been established between the service operation terminal 3 and the remote maintenance service unit 12 (or the data transfer service unit 13) of the key telephone exchange apparatus 1 is terminated.

FIG. 5 is a flowchart illustrating details of service selection processing performed in Step S3 of FIG. 2.

In Step S31, the call control unit 11 of the key telephone exchange apparatus 1 receives the call of the SIP/SDP INVITE request (the data D1 of FIG. 3 or the data D3 of FIG. 4) from the service operation terminal 3 via the IP telephone network 5 and the router 2.

In Step S32, the call control unit 11 of the key telephone exchange apparatus 1 determines whether the media type contained in the INVITE request received as the call in the processing of Step S31 is "application", or "audio" or "video", and when the call control unit 11 determines that the media type is "application", the processing proceeds to Step S33.

In Step S33, the call control unit 11 of the key telephone exchange apparatus 1 determines whether the media format contained in the INVITE request received as the call in the processing of Step S31 is "http" or "octet-stream", and when the call control unit 11 determines that the media format is "http", the processing proceeds to Step S34. Note that, although determination is made as to whether the media format is "http" or "octet-stream" in the processing of Step S33, it should be understood that this is merely an example and other media formats may be used.

In Step S34, the call control unit 11 of the key telephone exchange apparatus 1 activates the application of the remote maintenance service of the remote maintenance service unit 12 and further opens the Web port of the remote maintenance service unit 12 (arrow A1 of FIG. 3). The call control unit 11 of the key telephone exchange apparatus 1 then notifies the service operation terminal 3 of the OK response (data D2 of FIG. 3) containing the port number of the opened Web port via the router 2 and the IP telephone network 5. This enables the service operation terminal 3 that has transmitted the SIP/SDP INVITE request to access to the port for the remote maintenance service of the key telephone exchange apparatus 1 and use the remote maintenance service.

In Step S33, when the call control unit 11 of the key telephone exchange apparatus 1 determines that the media format contained in the INVITE request received as the call in the processing of Step S31 is "octet-stream", the processing proceeds Step S35.

In Step S35, the call control unit 11 of the key telephone exchange apparatus 1 activates the application of the data transfer service of the data transfer service unit 13 and further opens the Web port of the data transfer service unit 13 (arrow A2 of FIG. 4). The call control unit 11 of the key telephone exchange apparatus 1 then notifies the service operation terminal 3 of the OK response (data D4 of FIG. 4) containing the port number of the opened Web port via the router 2 and the IP telephone network 5. This enables the service operation terminal 3 that has transmitted the SIP/SDP INVITE request to access to the port for the data transfer service of the key telephone exchange apparatus 1 and use the data transfer service.

In Step S32, when the call control unit 11 of the key telephone exchange apparatus 1 determines that the media type contained in the INVITE request received as the call in the processing of Step S31 is "audio" or "video", the processing proceeds Step S36.

In Step S36, the call control unit 11 of the key telephone exchange apparatus 1 determines that the call from the service operation terminal 3 is based on voice communication or on video communication, and establishes a stream (audio stream or video stream) enabling transmission and reception of an audio signal or a video signal via the IP telephone network 5.

### [Effects of Embodiment of the Present Invention]

1. As described above, it is possible to perform the voice communication, the video communication, and the data communication with the use of one telephone number.
2. In the case of the data communication, it is possible to select from among the plurality of Web services and activate the selected Web service with the use of one telephone number.
3. Control is performed by using the SDP media type and media format, and hence communication control is performed more freely and positively than in conventional control involving distributing called parties based on limited elements of information. In addition, the media format is variable, and hence by adding the media format to be recorded on the key telephone exchange apparatus 1, it is possible to increase the number of Web services to be activated by utilizing the present invention.
4. In the embodiment described above, any network device capable of terminating SIP may be used as the service operation terminal 3 as the called party in the data communication system. A Web service that can be used on the network device can be activated by establishing communication by SIP. {0073}
5. The above-mentioned series of processing may be executed by hardware, or may be executed by software. When the series of processing is executed by software, a computer program constituting the software is installed, via a computer program recording medium, on a computer incorporated into dedicated hardware, or, for example, on a general-purpose personal computer capable of executing various kinds of functions after various kinds of computer programs are installed thereon.

The general-purpose computer includes a control unit including a CPU, a ROM, and a RAM, an input unit including a keyboard and a mouse, a display unit including a display, a storage unit including a semiconductor memory and a magnetic disk, a communication unit including a LAN card and a modem, and a drive that drives a removable medium. On the computer configured as described above, the above-mentioned series of processing is executed by, for example, the CPU loading the computer program stored in the storage unit onto the RAM to execute the computer program.

The computer program to be executed by the computer (control unit) is provided by, for example, being recorded on a removable medium, which is a package medium including a magnetic disk (including a flexible disk), an optical disc (such as a compact disc-read only memory (CD-ROM) and a digital versatile disc (DVD)), a magneto-optical disk, or a semiconductor memory. Alternatively, the computer program is provided via a wired or wireless transmission medium such as a local area network, the Internet, or digital satellite broadcasting.

Note that, the computer program to be executed by the computer may be a computer program for performing the processing in time series in accordance with the order described herein. Alternatively, the computer program may be a computer program for performing the processing in parallel, or performing the processing when the program is invoked or at other necessary timings. Further, the computer program may be executed after being transferred to a remote computer.

The present invention is not limited to the above-mentioned embodiment as it is, and various inventions can be formed at the stage of carrying out the present invention without departing from the gist thereof by modifying the components and embodying the modified components or by combining the plurality of components disclosed in the above-mentioned embodiment as appropriate. For example, some of all the components described in the embodiment may be omitted. Still alternatively, the components may be combined across different embodiments as appropriate.

### {Reference Signs List}

- 1: key telephone exchange apparatus
- 3: service operation terminal
- 5: IP telephone network
- 11: call control unit
- 12: remote maintenance service unit
- 13: data transfer service unit

## Claims

1. A data communication system, comprising a first communication terminal and a second communication terminal that perform communication to/from each other via a network, in which:
the first communication terminal comprises control means for controlling activation of a predetermined Web service based on session information transmitted from the second communication terminal;
the session information comprises information using a Session Initiation Protocol (SIP), and includes a Request-Line, a header, and a message body; and
the message body has information on a session using a Session Description Protocol (SDP) described therein.

2. The data communication system according to claim 1, wherein the control means controls the activation of the predetermined Web service based on information on media included in the message body.

3. The data communication system according to claim 2, wherein the control means controls the activation of the predetermined Web service based on a media type and a media format that are included in the information on the media.

4. The data communication system according to claim 3, wherein the media type comprises an application, an audio, or a video, and the media format comprises http or octet-stream.

5. A data communication method for use in a data communication system, the data communication system comprising a first communication terminal and a second communication terminal that perform communication to/from each other via a network, wherein:
the data communication method comprising a control step of controlling, by the first communication terminal, activation of a predetermined Web service based on session information transmitted from the second communication terminal,
the session information comprises information using a Session Initiation Protocol (SIP), and includes a Request-Line, a header, and a message body, and
the message body has information on a session using a Session Description Protocol (SDP) described therein.

6. A computer program for causing a computer to execute data communication processing of a data communication system, the data communication system comprising a first communication terminal and a second communication terminal that perform communication to/from each other via a network, wherein:
the computer program causes the computer to execute processing comprising a control step of controlling activation of a predetermined Web service based on session information transmitted from the second communication terminal;
the session information comprises information using a Session Initiation Protocol (SIP), and includes a Request-Line, a header, and a message body; and
the message body has information on a session using a Session Description Protocol (SDP) described therein.

7. A data communication terminal for performing communication to/from another communication terminal via a network, wherein:
the data communication terminal comprises control means for controlling activation of a predetermined Web service based on session information transmitted from the another communication terminal;
the session information comprises information using a Session Initiation Protocol (SIP), and includes a Request-Line, a header, and a message body; and
the message body has information on a session using a Session Description Protocol (SDP) described therein.
